# EUROPÄISCHE PATENTSCHRIFT

(11) **EP 4 291 800 B1**
(45) Veröffentlichungstag und Bekanntmachung des Hinweises auf die Patenterteilung: **02.12.2026**
(21) Anmeldenummer: 22707336.8
(22) Anmeldetag: 03.02.2022
(51) Int. Cl.: F16F 7/104, F24F 1/40, F25D 23/00

(54) **WÄRMEPUMPE**
HEAT PUMP
POMPE À CHALEUR

(30) Priorität: 10.02.2021 DE 102021103059
(43) Veröffentlichungstag der Anmeldung: 20.12.2023
(73) Patentinhaber: Viessmann Holding International GmbH, 35108 Allendorf (Eder) (DE)
(72) Erfinder: SCHMIDT, Thorsten, 35041 Marburg (DE); LANG, Eduard, 35108 Allendorf (DE); IMMEL, Markus, 35075 Gladenbach (DE); NÖH, Philipp, 35767 Breitscheid (DE)
(74) Vertreter: Wolf & Wolf Patentanwaltsgesellschaft mbH
(86) Internationale Anmeldenummer: PCT/DE2022/100094
(87) Internationale Veröffentlichungsnummer: WO 2022/171247

(56) Entgegenhaltungen:
- EP-B1- 1 018 627
- CN-U- 206 222 539
- JP-A- 2005 241 197
- JP-A- 2009 018 602
- US-B1- 6 260 373

## Beschreibung

Die Erfindung betrifft eine Wärmepumpe gemäß dem Oberbegriff des Patentanspruchs 1.

Eine Wärmepumpe der eingangs genannten Art wird beispielsweise von der Anmelderin unter der Produktbezeichnung VITOCAL 222-A hergestellt und verkauft. Diese Wärmepumpe besteht aus einem Gehäuse, mindestens einem an einer Unterseite des Gehäuses angeordneten Lastabtragelement (in diesem Fall eine Bodenschiene), einem im Gehäuse senkrecht oberhalb des Lastabtragelements angeordneten Verdichter und weiteren, ebenfalls im Gehäuse angeordneten Wärmepumpenkomponenten, wobei zwischen dem Verdichter und dem Lastabtragelement ein elastisches Isolierelement angeordnet ist.

Der Erfindung liegt die Aufgabe zugrunde, eine Wärmepumpe der eingangs genannten Art weiter zu verbessern. Insbesondere soll eine noch leisere Wärmepumpe geschaffen werden.

Diese Aufgabe ist mit einer Wärmepumpe der eingangs genannten Art durch die im Kennzeichen des Patentanspruchs 1 aufgeführten Merkmale gelöst.

Nach der Erfindung ist also vorgesehen, dass mehrere Wärmepumpenkomponenten, nämlich eine Expansionseinrichtung und ein Kältemittelsammler, auf einem gemeinsamen, senkrecht oberhalb eines Lastabtragelements angeordneten Tragelement positioniert sind, wobei zwischen dem Tragelement und dem Lastabtragelement ein weiteres elastisches Isolierelement angeordnet ist, wobei der Verdichter und das Tragelement dem gleichen Lastabtragelement zugeordnet sind, wobei das Tragelement verdichterfrei ausgebildet ist.

Mit anderen Worten zeichnet sich die erfindungsgemäße Lösung somit dadurch aus, dass mögliche vom Verdichter und den weiteren Wärmepumpenkomponenten ausgehende Schwingungen in ihrer Ausbreitung gehindert werden. Durch diese gezielte Anordnung und die konstruktive Ausgestaltung des Lastabtragelements wird also im Grunde für den Verdichter, die Wärmepumpenkomponenten und die lastabtragende Struktur ein Starrkörperverhalten im tieffrequenten Bereich bis mindestens 100 Hz erreicht.

Andere vorteilhafte Weiterbildungen ergeben sich aus den abhängigen Patentansprüchen.

Der Vollständigkeit halber wird noch auf folgende Dokumente hingewiesen:
Aus dem Dokument US 2021/0018189 A1 ist ein gattungsähnliches Gerät bekannt, dass sich aber mindestens dadurch von der erfindungsgemäßen Lösung unterscheidet, dass dort nicht sowohl der Verdichter als auch das Tragelement mit den Wärmepumpenkomponenten senkrecht oberhalb eines Lastabtragelements angeordnet sind.

Mindestens das gleiche gilt im übrigen für die Geräte gemäß den Dokumenten GB 2483446 A, CN 207662015 U und EP 3 789 696 A1. Aus dem Dokument US 6 260 373 B1 ist eine Wärmepumpe mit doppelter Schwingungsisolierung bekannt, bei der auf einem gemeinsamen Tragelement jedoch weder eine Expansionseinrichtung noch ein Kältemittelsammler angeordnet ist. Aus dem Dokument EP 1 018 627 B1 ist eine wandmontierte Wärmepumpe bekannt, die kein an einer Unterseite des Gehäuses angeordnetes Lastabtragelement aufweist und deren Tragelement nicht verdichterfrei ausgebildet ist."

Die erfindungsgemäße Wärmepumpe einschließlich ihrer vorteilhaften Weiterbildungen gemäß der abhängigen Patentansprüche wird nachfolgend anhand der zeichnerischen Darstellung verschiedener Ausführungsbeispiele näher erläutert.

Es zeigt schematisch
- Figur 1: perspektivisch die erfindungsgemäße Wärmepumpe mit dem Tragelement für die Wärmepumpenkomponenten;
- Figur 2: in Seitenansicht den auf dem Lastabtragelement positionierten Verdichter;
- Figur 3: in Seitenansicht das auf dem Lastabtragelement positionierte Tragelement mit den Wärmepumpenkomponenten;
- Figur 4: schematisch eine Wärmepumpe mit einer in alle Richtungen gewundenen Fluidleitung zwischen dem Verdichter und der Wärmepumpenkomponente; und
- Figur 5: einen Schnitt durch die Fluidleitung gemäß Figur 4.

Die in den Figuren dargestellte Wärmepumpe besteht aus einem Gehäuse 1, mindestens einem an einer Unterseite 1.1 des Gehäuses 1 angeordneten Lastabtragelement 2, einem im Gehäuse 1 senkrecht oberhalb des Lastabtragelements 2 angeordneten Verdichter 3 und weiteren, ebenfalls im Gehäuse 1 angeordneten Wärmepumpenkomponenten 4, wobei zwischen dem Verdichter 3 und dem Lastabtragelement 2 ein elastisches Isolierelement 5 angeordnet ist.

Wesentlich für die erfindungsgemäße Wärmepumpe ist nun, dass mehrere Wärmepumpenkomponenten 4 auf einem gemeinsamen, senkrecht oberhalb eines Lastabtragelements 2 angeordneten Tragelement 6 positioniert sind, wobei zwischen dem Tragelement 6 und dem Lastabtragelement 2 ein elastisches Isolierelement 7 angeordnet ist, wobei der Verdichter 3 und das Tragelement 6 dem gleichen Lastabtragelement 2 zugeordnet sind.

Die vorstehend verwendete Formulierung "mehrere Wärmepumpenkomponenten" umfasst dabei alle möglichen Komponenten einer Wärmepumpe, abgesehen vom eingangs genannten Verdichter 3, woraus im Umkehrschluss folgt, dass das Tragelement 6 verdichterfrei ausgebildet ist, sprich der Verdichter 3 ist bei der erfindungsgemäßen Lösung (wie auch aus den Figuren ersichtlich) nicht auf dem Tragelement 6 angeordnet.

Die vorstehend verwendete Maßgabe "senkrecht oberhalb" bedeutet dabei insbesondere, dass sowohl der Verdichter 3 als auch das Tragelement 6 (mit den weiteren Wärmepumpenkomponenten 4) jeweils mit seinem Schwerpunkt senkrecht oberhalb des Lastabtragelements 2 angeordnet ist.

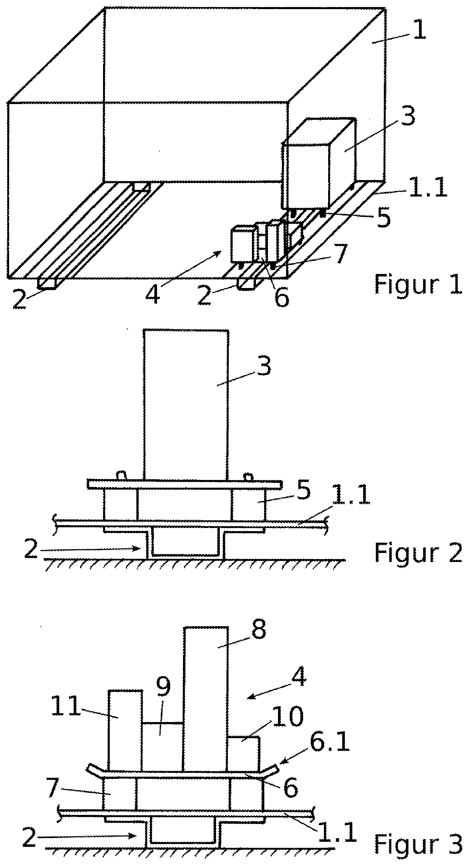

Es ist dabei bevorzugt, dass die Unterseite 1.1 des Gehäuses 1 aus einem zwischen dem Lastabtragelement 2 und dem elastischen Isolierelement 5, 7 angeordneten Blech (auch Bodenblech genannt) gebildet ist, siehe Figuren 2 und 3. Des Weiteren ist bevorzugt, dass das elastische Isolierelement 5, 7 mindestens teilweise aus einem Elastomer, vorzugsweise aus Polyurethanschaum, gebildet ist. Außerdem ist bevorzugt, dass der Verdichter 3 über mindestens drei (vorzugsweise auf den Ecken eines gedachten Dreiecks angeordnete) elastische Isolierelemente 5 mit dem Lastabtragelement 2 verbunden ausgebildet ist.

Weiterhin ist bevorzugt, dass an der Unterseite 1.1 des Gehäuses 1 zwei Lastabtragelemente 2, vorzugsweise parallel zueinander, angeordnet sind. Ebenso ist das Lastabtragelement 2 vorzugsweise mindestens dreimal, vorzugsweise sechsmal, besonders bevorzugt achtmal, länger als breit bzw. hoch ausgebildet und/oder ist das Lastabtragelement 2 vorzugsweise als aus Blech gebildete Profilschiene ausgebildet.

Zudem ist bevorzugt, dass auf dem Tragelement 6 als Wärmepumpenkomponenten 4 wahlweise ein Wärmeübertrager 8, vorzugsweise ein Plattenwärmeübertrager, eine Expansionseinrichtung 9, eine Ventileinrichtung 10 und/oder ein Kältemittelsammler 11 angeordnet sind bzw. ist, siehe Figur 3. Ebenso ist bevorzugt, dass das Tragelement 6 plattenförmig, vorzugsweise aus Blech, ausgebildet ist. Dabei ist das plattenförmige Tragelement 6 randseitig mit Abkantungen 6.1 versehen ausgebildet. Dies dient der Versteifung des Tragelements 6 und fördert das Starrkörper-Schwingungsverhalten der Wärmepumpe. Weiterhin ist bevorzugt, dass die Wärmepumpenkomponenten 4 am Tragelement 6 befestigt angeordnet sind. Ferner ist das Tragelement 6 vorzugsweise und abgesehen vom Kontakt über die sich aus der Anordnung oberhalb des Lastabtragelements 2 ergebenden Standflächen im übrigen fixierungsfrei mit dem Lastabtragelement 2 verbunden ausgebildet. Dieser passive Block steht also letztlich einfach auf dem Lastabtragelement 2, wobei insbesondere allein durch die Verrohrung zum Verdichter 3 eine seitliche Verschiebung ausgeschlossen ist.

Die erfindungsgemäße Wärmepumpe weist in ihren oben beschriebenen Ausführungsformen ein Starrkörperverhalten auf, welches zu einer guten Dämmung der durch die Wärmepumpenkomponenten 4 und insbesondere den Verdichter 3 erzeugten tieffrequenten Schwingungen führt. Hierdurch wird die Lärmbelastung durch die Wärmepumpe wesentlich reduziert.

Ferner ist weiterhin bevorzugt vorgesehen:

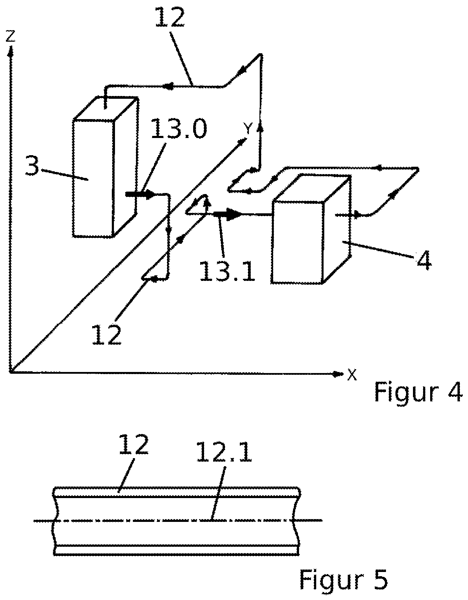

Die in Figur 4 schematisch dargestellte Wärmepumpe besteht bevorzugt aus dem Verdichter 3, der über zwei kältemittelführende Fluidleitungen 12 mit einer der kältemitteldurchströmten Wärmepumpenkomponenten 4 verbunden ausgebildet ist, wobei jede Fluidleitung 12 eine Längsachse 12.1 aufweist (siehe hierzu Figur 5), wobei ein gedachter, mit der Längsachse 12.1 zusammenfallender Richtungsvektor 13.1 im Verlauf zwischen dem Verdichter 3 und der Wärmepumpenkomponente 4 mindestens einmal in eine andere Richtung als ein gedachter, am Verdichter 3 beginnender und dort ebenfalls mit der Längsachse 12.1 zusammenfallender Anfangsrichtungsvektor 13.0 weist, wobei die Längsachse 12.1 in einem Raum mit drei gedachten, senkrecht zueinander stehenden Ebenen XY, XZ, YZ verlaufend ausgebildet ist.

Um eine Schwingungsübertragung vom Verdichter 3, der vorzugsweise einen Elektromotor umfasst, auf die mindestens eine Wärmepumpenkomponente 4 so gut es geht zu unterdrücken, ist nun bevorzugt vorgesehen, dass die Fluidleitung 12 so geformt ist, dass der Richtungsvektor 13.1 im Verlauf zwischen dem Verdichter 3 und der Wärmepumpenkomponente 4 und in Bezug auf alle drei Ebenen XY, XZ, YZ mindestens einmal um einen Winkel von 180° gedreht zum Anfangsrichtungsvektor 13.0 verlaufend ausgebildet ist.

Diese Maßgabe führt insgesamt betrachtet zu einer Vergrößerung der Elastizität bzw. Verringerung der Steifigkeit der Fluidleitung zwischen dem Verdichter 3 und der Wärmepumpenkomponente 4 und damit zu einer reduzierten Schwingungsübertragung.

Diese Lösung gemäß Figur 4 geht dabei letztlich davon aus, dass die Fluidleitung 12 vorzugsweise aus einem metallischen Werkstoff gebildet ist. Gegebenenfalls kommt vorzugsweise auch noch Kunststoff in Betracht. Je elastischer das tatsächlich verwendete Material der Fluidleitung aber an sich ist, desto weniger bedarf es logischer Weise des Ansatzes gemäß Figur 4.

Zur Realisierung einer möglichst ungestörten Strömung des Kältemittels durch die Fluidleitung 12 ist ferner bevorzugt vorgesehen, dass diese an allen ihren gekrümmten Bereichen stetig gekrümmt ausgebildet ist. Der Begriff "stetig" ist hierbei mathematisch gemeint. Anders ausgedrückt, soll also vorgesehen sein, dass die Fluidleitung 12 keine scharfkantigen Knicke aufweist. In Figur 4 sind die Richtungsänderungen der Fluidleitung 12 entsprechend abgerundet dargestellt.

Weiterhin ist bevorzugt vorgesehen, dass die Fluidleitung 12 im Verlauf zwischen dem Verdichter 3 und der Wärmepumpenkomponente 4 mindestens teilweise wahlweise um den Verdichter 3 und/oder die Wärmepumpenkomponente 4 herumgeführt ausgebildet ist. Diese Maßgabe, die weiter zur Reduktion einer Schwingungsübertragung beiträgt, gilt für die (wie die entsprechenden Pfeile verdeutlichen) von der Wärmepumpenkomponente 4 zum Verdichter 3 führende Fluidleitung 12.

Zudem ist ferner besonders bevorzugt vorgesehen, dass die Umlenkung der Fluidleitung 12 nicht nur um mindestens 180°, sondern vorzugsweise um mindesten 270° erfolgt. Ganz besonders bevorzugt ist vorgesehen, dass die Fluidleitung 12 so geformt ist, dass der Richtungsvektor 13.1 im Verlauf zwischen dem Verdichter 3 und der Wärmepumpenkomponente 4 und in Bezug auf eine der drei Ebenen XY, XZ, YZ eine vollständige 360°-Wendung im Vergleich zum Anfangsrichtungsvektor 13.0 vollziehend ausgebildet ist. In Figur 4 erfüllen beide dargestellten Fluidleitungen 12 genau diese Maßgabe.

Die erfindungsgemäße Wärmepumpe besteht weiterhin bevorzugt aus dem Verdichter 3 zum Verdichten eines Kältemittels und den, vom Kältemittel durchströmten Wärmepumpenkomponenten 4, wobei der Verdichter 3 zur Führung des Kältemittels über Fluidleitungen 12 mit einer der weiteren Wärmepumpenkomponenten 4 verbunden ausgebildet ist und wobei der Verdichter 3 und die weitere Wärmepumpenkomponente 4 zur Reduktion einer Übertragung von Körperschall über Federelemente mit einem Gehäuse 1 der Wärmepumpe verbunden ausgebildet sind.

Dabei ist bevorzugt vorgesehen, dass die Federelemente (tatsächlich) mindestens teilweise aus einem Elastomer, insbesondere Polyurethanschaum, also als elastische Isolierelemente 5, 7 gebildet sind.

Ferner ist bevorzugt vorgesehen, dass eine erste Fluidleitung 12 als Kältemittelzufuhrleitung zum Verdichter 3 und eine zweite Fluidleitung 12 als Kältemittelabfuhrleitung vom Verdichter 3 ausgebildet ist.

Weiterhin ist bevorzugt vorgesehen, dass die Fluidleitungen 12 wahlweise aus einem Material mit einer Steifigkeit wie ein metallisches Material und/oder aus einem metallischen Material gebildet sind.

Vorteilhaft ist weiterhin vorgesehen, dass der Verdichter 3 und die weitere Wärmepumpenkomponente 4 miteinander ausschließlich einerseits über die sie verbindenden Fluidleitungen 12 und andererseits über die mit dem Gehäuse 1 der Wärmepumpe verbundenen elastischen Isolierelemente 5, 7 fest verbunden ausgebildet sind. Diese Maßgabe führt zu einer besonders guten Entkopplung des Verdichters 3 von den anderen Wärmepumpenkomponenten 4 und damit zu einer sehr geräuscharmen Wärmepumpe.

Noch etwas genauer betrachtet, ist besonders bevorzugt vorgesehen, dass die weitere Wärmepumpenkomponente 4 als Ventileinrichtung, insbesondere als Mehrwegeventil, ausgebildet ist.

Weiterhin ist, wie oben bereits erwähnt, vorgesehen, dass die weitere Wärmepumpenkomponente 4 auf dem Tragelement 6 positioniert ist. Dabei ist weiterhin bevorzugt vorgesehen, dass das Tragelement 6 über die Federelemente mit dem Gehäuse 1 der Wärmepumpe verbunden ausgebildet ist. Ferner ist noch bevorzugt vorgesehen, dass noch weitere Wärmepumpenkomponenten 4 der Wärmepumpe, wie ein Wärmeübertrager 8, eine Expansionseinrichtung 9 und/oder ein Kältemittelsammler 11, auf dem Tragelement 6 positioniert sind. Diese weiteren, passiven (weil nicht selbst Schwingungen produzierenden) Wärmepumpenkomponenten bilden dabei vorteilhaft, wie ersichtlich, auf dem Tragelement 6 eine integrierte Baugruppe, die letztlich nur über die Fluidleitungen 12 zum Schwingen angeregt wird.

Die erfindungsgemäße Wärmepumpe besteht weiterhin bevorzugt aus einem innerhalb eines Betriebsdrehzahlbereichs arbeitenden und dabei mindestens eine Störfrequenz erster Ordnung verursachenden Verdichter 3 zum Verdichten eines Kältemittels und weiteren, auf dem Tragelement 6 angeordneten und ebenfalls vom Kältemittel durchströmten Wärmepumpenkomponenten 4.

Etwas genauer betrachtet, ist hier bevorzugt vorgesehen, dass auf dem Tragelement 6 wahlweise mindestens ein Wärmeübertrager 8, eine Ventileinrichtung 10 und/oder eine Expansionseinrichtung 9 angeordnet sind.

Weiterhin ist bevorzugt vorgesehen, dass eine Einheit aus dem Tragelement 6 und den darauf angeordneten Wärmepumpenkomponenten 4 eine erste Eigenfrequenz aufweist, die größer ist als die vom im Betriebsdrehzahlbereich arbeitenden Verdichter 3 an die starrkörperartig wirkende Einheit übertragene Störfrequenz erster Ordnung.

Dabei ist besonders bevorzugt vorgesehen, dass der Verdichter 3 einen Betriebsdrehzahlbereich von 700 bis 7200 Umdrehungen pro Minute, besonders bevorzugt von 800 bis 6900 Umdrehungen pro Minute, ganz besonders bevorzugt von 900 bis 6600 Umdrehungen pro Minute aufweist.

Außerdem ist besonders bevorzugt vorgesehen, dass die Einheit aus dem Tragelement 6 und den darauf angeordneten Wärmepumpenkomponenten 4 eine erste Eigenfrequenz von mehr als 100 Hz, besonders bevorzugt von mehr als 120 Hz, ganz besonders bevorzugt von mehr als 140 Hz aufweist.

Um auf die oben genannte Bedingung hinzuarbeiten, ist darüber hinaus besonders bevorzugt vorgesehen, dass (schon!) das Tragelement 6 eine erste Eigenfrequenz aufweist, die größer ist als die vom im Betriebsdrehzahlbereich arbeitenden Verdichter 3 verursachte Störfrequenz erster Ordnung.

Um noch weiter auf die oben genannte Bedingung hinzuarbeiten, ist darüber hinaus besonders bevorzugt vorgesehen, dass jede Wärmepumpenkomponente 4 eine erste Eigenfrequenz aufweist, die größer ist als die vom im Betriebsdrehzahlbereich arbeitenden Verdichter 3 verursachte Störfrequenz erster Ordnung.

Für den Fall, dass aufgrund einer entsprechenden Materialauswahl einer Verrohrung der Wärmepumpenkomponenten 4 ebenfalls Handlungsbedarf besteht, ist weiterhin besonders bevorzugt vorgesehen, dass die Einheit einschließlich der Verrohrung der Wärmepumpenkomponenten 4 eine erste Eigenfrequenz aufweist, die größer als die vom im Betriebsdrehzahlbereich arbeitenden Verdichter 3 an die starrkörperartig wirkende Einheit übertragene Störfrequenz erster Ordnung ist.

Mit anderen Worten ausgedrückt, ist also bevorzugt vorgesehen, dass im Grunde auf Basis der lokalen Eigenfrequenzen der einzelnen Komponenten eine gekoppelte Eigenfrequenz der gesamten Einheit bestimmt bzw. so ausgelegt wird, dass diese oberhalb der Störfrequenz erster Ordnung des Verdichters 3 liegt.

So ist zum Beispiel zur Erhöhung der lokalen Eigenfrequenz, wie in Figur 3 dargestellt, auch vorgesehen, dass das Tragelement 6 zur Vergrößerung seiner Eigenfrequenz als Platte mit einer Abkantung ausgebildet ist. Darüber hinaus kann bevorzugt vorgesehen sein, dass das Tragelement 6 dicker als für die eigentliche Belastung erforderlich ausgebildet ist.

Weiterhin ist bevorzugt vorgesehen, dass der Verdichter 3 über ein (typischer Weise - wie auch dargestellt - mehrere) elastische(s) Isolierelement(e) 5 an einem Gehäuse 1 der Wärmepumpe befestigt ausgebildet ist. In vergleichbarer Weise ist ferner bevorzugt vorgesehen, dass das Tragelement 6 über ein (bzw. mehrere) elastische(s) Isolierelement(e) 7 an einem Gehäuse 1 der Wärmepumpe befestigt ausgebildet ist.

Dabei ist weiterhin besonders bevorzugt vorgesehen, dass das elastische Isolierelement 5, 7 mindestens teilweise aus einem Elastomer, vorzugsweise aus Polyurethanschaum, gebildet ist.

Weiterhin ist bevorzugt vorgesehen, dass der Verdichter 3 und die Einheit abgesehen von erforderlichen Fluidleitungen 12 zwischen dem Verdichter 3 und der Einheit unabhängig voneinander schwingfähig ausgebildet sind.

Schließlich ist, um für eine gleichmäßige Belastung des Isolierelements 7 (bzw. der Isolierelemente 7) zu sorgen, besonders bevorzugt vorgesehen, dass ein Schwerpunkt der Einheit - durch geeignete Anordnung der Wärmepumpenkomponenten 4 - so gewählt ist, dass sich eine senkrechte Gewichtskrafteinleitung ins Isolierelement 7 (bzw. in die Isolierelemente 7) ergibt. Diese Maßgabe gilt analog für den Verdichter 3 und sein Isolierelement 5 (bzw. seine Isolierelemente 5).

### Bezugszeichenliste

- 1: Gehäuse
- 1.1: Unterseite
- 2: Lastabtragelement
- 3: Verdichter
- 4: Wärmepumpenkomponente
- 5: elastisches Isolierelement
- 6: Tragelement
- 6.1: Abkantung
- 7: elastisches Isolierelement
- 8: Wärmeübertrager
- 9: Expansionseinrichtung
- 10: Ventileinrichtung
- 11: Kältemittelsammler
- 12: Fluidleitung
- 12.1: Längsachse
- 13.0: Anfangsrichtungsvektor
- 13.1: Richtungsvektor

- XY: Ebene, senkrecht zu XZ und YZ
- XZ: Ebene, senkrecht zu XY und YZ
- YZ: Ebene, senkrecht zu XY und XZ

## Patentansprüche

1. Wärmepumpe, umfassend ein Gehäuse (1), mindestens ein an einer Unterseite (1.1) des Gehäuses (1) angeordnetes Lastabtragelement (2), einen im Gehäuse (1) senkrecht oberhalb des Lastabtragelements (2) angeordneten Verdichter (3) und weitere, ebenfalls im Gehäuse (1) angeordnete Wärmepumpenkomponenten (4), wobei zwischen dem Verdichter (3) und dem Lastabtragelement (2) ein elastisches Isolierelement (5) angeordnet ist,
**dadurch gekennzeichnet,**
**dass** mehrere Wärmepumpenkomponenten (4), nämlich eine Expansionseinrichtung (9) und ein Kältemittelsammler (11), auf einem gemeinsamen, senkrecht oberhalb eines Lastabtragelements (2) angeordneten Tragelement (6) positioniert sind, wobei zwischen dem Tragelement (6) und dem Lastabtragelement (2) ein weiteres elastisches Isolierelement (7) angeordnet ist, wobei der Verdichter (3) und das Tragelement (6) dem gleichen Lastabtragelement (2) zugeordnet sind, wobei das Tragelement (6) verdichterfrei ausgebildet ist.

2. Wärmepumpe nach Anspruch 1,
**dadurch gekennzeichnet,**
**dass** auf dem Tragelement (6) zusätzlich wahlweise ein Wärmeübertrager (8) und/oder eine Ventileinrichtung (10) angeordnet sind bzw. ist.

3. Wärmepumpe nach Anspruch 1 oder 2,
**dadurch gekennzeichnet,**
**dass** das Tragelement (6) plattenförmig ausgebildet ist.

4. Wärmepumpe nach Anspruch 3,
**dadurch gekennzeichnet,**
**dass** das plattenförmige Tragelement (6) randseitig mit Abkantungen (6.1) versehen ausgebildet ist.

5. Wärmepumpe nach einem der Ansprüche 1 bis 4,
**dadurch gekennzeichnet,**
**dass** die Wärmepumpenkomponenten (4) am Tragelement (6) befestigt angeordnet sind.

6. Wärmepumpe nach einem der Ansprüche 1 bis 5,
**dadurch gekennzeichnet,**
**dass** das Tragelement (6) abgesehen vom Kontakt über die sich aus der Anordnung oberhalb des Lastabtragelements (2) ergebenden Standflächen im übrigen fixierungsfrei mit dem Lastabtragelement (2) verbunden ausgebildet ist.

7. Wärmepumpe nach einem der Ansprüche 1 bis 6,
**dadurch gekennzeichnet,**
**dass** die Unterseite (1.1) des Gehäuses (1) aus einem zwischen dem Lastabtragelement (2) und dem elastischen Isolierelement (5, 7) angeordneten Blech gebildet ist.

8. Wärmepumpe nach einem der Ansprüche 1 bis 7,
**dadurch gekennzeichnet,**
**dass** das Lastabtragelement (2) als aus Blech gebildete Profilschiene ausgebildet ist.

9. Wärmepumpe nach einem der Ansprüche 1 bis 8,
**dadurch gekennzeichnet,**
**dass** das elastische Isolierelement (5, 7) mindestens teilweise aus einem Elastomer gebildet ist.

## Claims

1. Heat pump comprising a housing (1), at least one load transfer element (2) arranged on an underside (1.1) of the housing (1), a compressor (3) arranged perpendicularly above the load transfer element (2) in the housing (1), and further heat pump components (4) that are likewise arranged in the housing (1), wherein an elastic insulating element (5) is arranged between the compressor (3) and the load transfer element (2),
**characterized in that**
a plurality of heat pump components (4), namely an expansion device (9) and a refrigerant collector (11) are positioned on a common support element (6) arranged perpendicularly above a load transfer element (2), wherein a further elastic insulating element (7) is arranged between the support element (6) and the load transfer element (2), wherein the compressor (3) and the support element (6) are assigned to the same load transfer element (2), wherein the support element (6) is designed without a compressor.

2. Heat pump according to claim 1,
**characterized in that**
optionally a heat exchanger (8) and/or a valve device (10) is/are also arranged on the support element (6).

3. Heat pump according to claim 1 or 2,
**characterized in that**
the support element (6) is designed in the form of a plate.

4. Heat pump according to claim 3,
**characterized in that**
the plate-like support element (6) is furnished with bevels (6.1) on the edges thereof.

5. Heat pump according to any one of claims 1 to 4,
**characterized in that**
the heat pump components (4) are fastened to the support element (6).

6. Heat pump according to any one of claims 1 to 5,
**characterized in that**
apart from the contact via the standing areas resulting from the arrangement above the load transfer element (2), the support element (6) is otherwise connected to the load transfer element (2) without fixing means.

7. Heat pump according to any one of claims 1 to 6,
**characterized in that**
the underside (1.1) of the housing (1) is formed from a sheet metal plate arranged between the load transfer element (2) and the elastic insulating element (5, 7).

8. Heat pump according to any one of claims 1 to 7,
**characterized in that**
the load transfer element (2) is designed as a profile rail formed from sheet metal.

9. Heat pump according to any one of claims 1 to 7,
**characterized in that**
the elastic insulating element (5, 7) is formed at least in part from an elastomer.

## Revendications

1. Pompe à chaleur, comprenant un corps de pompe (1), au moins un élément de transfert de charge (2) disposé sur une face inférieure (1.1) du corps de pompe (1), un compresseur (3) disposé dans le corps de pompe (1) perpendiculairement au-dessus de l'élément de transfert de charge (2) et d'autres composants de pompe à chaleur (4) disposés également dans le corps de pompe (1), sachant qu'un élément d'isolation élastique (5) est disposé entre le compresseur (3) et l'élément de transfert de charge (2),
**caractérisée en ce que**
plusieurs composants de pompe à chaleur (4), notamment un système d'expansion (9) et un collecteur de frigorigène (11), sont positionnés sur un élément porteur (6) commun, disposé perpendiculairement au-dessus d'un élément de transfert de charge (2), sachant qu'un autre élément d'isolation élastique (7) est disposé entre l'élément porteur (6) et l'élément de transfert de charge (2), sachant que le compresseur (3) et l'élément porteur (6) sont attribués au même élément de transfert de charge (2), sachant que l'élément de transfert de charge (6) est constitué sans compresseur.

2. Pompe à chaleur selon la revendication 1,
**caractérisée en ce qu'**
un transmetteur de chaleur (8) et/ou un système de soupape (10) est ou sont disposé(s) en plus selon nécessité sur l'élément porteur (6).

3. Pompe à chaleur selon la revendication 1 ou 2, **caractérisée en ce que**
l'élément porteur (6) est constitué sous forme de plaque.

4. Pompe à chaleur selon la revendication 3,
**caractérisée en ce que**
l'élément porteur en forme de plaque (6) est constitué doté en bordure de chanfreinages (6.1).

5. Pompe à chaleur selon l'une quelconque des revendications 1 à 4,
**caractérisée en ce que**
les composants de pompe à chaleur (4) sont disposés fixés à l'élément porteur (6).

6. Pompe à chaleur selon l'une quelconque des revendications 1 à 5,
**caractérisée en ce que**
l'élément porteur (6) est constitué relié par ailleurs sans fixation à l'élément de transfert de charge (2) abstraction faite de contact par le biais des surfaces d'installation résultant de la disposition au-dessus de l'élément de transfert de charge (2).

7. Pompe à chaleur selon l'une quelconque des revendications 1 à 6,
**caractérisée en ce que**
la face inférieure (1.1) du corps de pompe (1) est formée d'une tôle disposée entre l'élément de transfert de charge (2) et l'élément d'isolation élastique (5, 7).

8. Pompe à chaleur selon l'une quelconque des revendications 1 à 7,
**caractérisée en ce que**
l'élément de transfert de charge (2) est formé sous la forme d'un rail profilé formé en tôle.

9. Pompe à chaleur selon l'une quelconque des revendications 1 à 8,
**caractérisée en ce que**
l'élément d'isolation élastique (5, 7) est formé au moins en partie d'un élastomère.
